(19) 

**Europäisches Patentamt**
**European Patent Office**
**Office européen des brevets**

(11) **EP 4 245 148 A1**

(12) **EUROPEAN PATENT APPLICATION**

(43) Date of publication:
**20.09.2023 Bulletin 2023/38**

(21) Application number: **22162846.4**

(22) Date of filing: **17.03.2022**

(51) International Patent Classification (IPC):
*A23F 5/24 (2006.01)*    *A23C 11/06 (2006.01)*
*A23C 11/10 (2021.01)*    *A23F 5/40 (2006.01)*
*A23L 2/66 (2006.01)*    *A23L 29/20 (2016.01)*
*A23L 29/269 (2016.01)*    *A23L 33/115 (2016.01)*
*A23L 33/185 (2016.01)*    *A23L 33/21 (2016.01)*

(52) Cooperative Patent Classification (CPC):
**A23L 2/66; A23F 5/243; A23F 5/40; A23J 3/14;**
**A23L 29/20; A23L 29/272; A23L 33/115;**
**A23L 33/185; A23L 33/21**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **DSM IP Assets B.V.**
**6411 TE Heerlen (NL)**

(72) Inventor: **LANGEVELD, Pieter Cornelis**
**P.O. Box 4**
**6100 AA ECHT (NL)**

(74) Representative: **DSM Intellectual Property**
**P.O. Box 4**
**6100 AA Echt (NL)**

(54) **COFFEE BEVERAGE WITH RAPESEED PROTEIN**

(57) The present invention relates to a coffee beverage comprising coffee and rapeseed protein, wherein the amount of rapeseed protein is between 0.1 and 10 wt. % of the coffee beverage.

EP 4 245 148 A1

## Description

### Field

The present invention relates to a coffee beverage comprising coffee and rapeseed protein. According to another aspect the present invention relates to rapeseed protein isolate packed in a single dosing. Finally, the present invention relates to use of rapeseed protein isolate.

### Background

To meet consumer demands for differentiated coffee beverages, food producers continuously develop new coffee beverages. Ready To Drink (RTD) coffee beverages are popular, which usually comprise creamers or whiteners to meet consumers demands in taste and texture. Creamers are conventionally based on dairy cream, but nowadays plant based creamers are being developed. There is a continuous need for alternative plant based creamers that improve the coffee beverage.

Fresh coffee prepared by coffee machines, like standard office coffee machines, has a taste that should be generally acceptable for the consumers. Often however the coffee is perceived as having a moderate taste and quality. Therefore, there is a need in the art to improve the coffee taste and increase the perception of quality.

### Detailed description

The present invention relates to a coffee beverage comprising coffee and rapeseed protein, wherein the amount of rapeseed protein is between 0.1 and 10 wt. % of the coffee beverage. Surprisingly, the inventor found that addition of rapeseed protein isolate to fresh coffee improves the coffee taste. The coffee taste is perceived as stronger, more lingering and more astringent. Without wishing to be bound to any theory, it is expected that the astringency of rapeseed protein balances well with coffee and results in an improved coffee tasted. Further, addition of canola protein results in a hazy and slightly lighter cup of coffee, which improves the overall quality perception of the coffee.

Preferably, the present coffee beverage comprises rapeseed protein in an amount between 0.2 and 8 wt. %, 0.5 and 7 wt. %, 0.6 and 6 wt. %, 1 and 5 wt. % or 1.5 to 3.5 wt. % of the coffee beverage.

Preferably, the present coffee beverage comprises coffee in an amount between 0.1 and 10 wt. %, 0.5 and 5 wt. % or 1 and 4 wt. % of the coffee beverage.

The rapeseed protein isolate can be used as a creamer. The rapeseed protein can be used as such, and can for example be added to fresh coffee. However, the coffee beverage may also comprise other ingredients.

In an embodiment, the coffee beverage comprises:

- coffee;
- vegetable oil (or fat); and/or
- and optionally a hydrocolloid.

Such a composition is suitable to prepare a RTD coffee beverage that is stable during storage. Preferably, the composition is an oil in water emulsion. Rapeseed protein is a strong emulsifier and delivers a stable product that can be refrigerated over longer periods of time. A coffee beverage comprising rapeseed protein solves stability problems such as sedimentation, syneresis, creaming, viscosity change and age gelation.

In an embodiment, the coffee beverage is refrigerated or shelf-stable. Preferably shelf-stable for a period of at least 2, 3 or 4 months.

In an embodiment, the coffee beverage is an oil-in-water emulsion. Preferably an oil-in-water emulsion wherein the size of the emulsion droplets has a D50 within the range of 1-50 $\mu$m and/or a D90 within the range of 5-70 $\mu$m or a D50 within the range of 2-30 $\mu$m and/or a D90 within the range of 5-50 $\mu$m, preferably a D50 within the range of 5-15 $\mu$m and/or a D90 within the range of 10-30 $\mu$m. Preferably, the size of the emulsion droplets has a D50 within the range of 2-20 $\mu$m, 3-15 $\mu$m, 4-12 $\mu$m, 5-10 $\mu$m. Preferably, the size of the emulsion droplets has a D90 within the range of 10-20 $\mu$m, 5-15 $\mu$m, 10-25 $\mu$m, 5-10 $\mu$m. The droplet size - expressed as the D50, D10 or D90, can be measured by particle size distribution assessment methods such as light scattering, and further checked using light microscopy. D50 stands for mass-median-diameter.

A fine distribution of oil droplets provides a whitening effect on the coffee beverage. Good results can be achieved with vegetable oils such as palm, palm kernel or coconut oil.

In a preferred embodiment, the present coffee beverage comprises:

- 0.5 to 5 wt. % coffee;

- 5 to 15 wt. % medium chain triglycerides;
- high acyl gellan gum; and/or
- buffer.

The term 'high acyl gellan gum" refers to high acyl form with two acyl substituents being acetate and glycerate. Both substituents are located on the same glucose residue and on average, there is one glycerate per repeat and one acetate per every two repeats. The amount of a high acyl gellan gum ranges from 0.01 to 0.04 wt. % of the coffee beverage. An example of a high acyl gellan gum is Gellaneer® from DSM.

The term "Medium-chain-triglycendes (MCT)" comprises C8:0 and C10:0 (50-65%):(34-45%) respectively, and C12:0 is less than 2.5%.

The present buffer preferably comprises sodium bicarbonate, di-potassium phosphate, citrate salts and/or combinations thereof. Preferably the amount of buffer, or sodium bicarbonate, is between 0.01 to 0.3 wt. % of the coffee beverage.

The coffee beverages can also include one or more ingredients such as flavors, taste modulators, sweeteners, colorants or a combination thereof.

In an embodiment, the present coffee beverage comprises a sweetener. Sweeteners can include, for example, sucrose, sucralose, acesulfame K, fructose, dextrose, maltose, dextrin, levulose, tagatose, galactose, corn syrup solids and other natural or artificial sweeteners. Sugarless sweeteners can include, but are not limited to, sugar alcohols such maltitol, xylitol, sorbitol, erythritol, mannitol, isomalt, lactitol, hydrogenated starch hydrolysates, and the like, alone or in combination.

Another preferred sweetener is steviol glycosides, such as steviol glycosides having additional glucose units added to the base steviol glycoside molecule via enzymatic glucosylation.

In a preferred embodiment, the present coffee beverage comprises a taste modulator. An example of a taste modulator is Modumax© from DSM. Preferably, the present coffee beverage comprises Modumax© and a flavour composition chosen from (i) a soy masking composition comprising steviol glycosides having additional glucose units added to the base steviol glycoside molecule via enzymatic glucosylation; (ii) a vanilla flavour composition comprising vanillin; (iii) a cream flavour composition comprising lactones; and (iv) any combinations thereof. Modumax© is preferably a flavour composition comprising glucans, mannans, amino acids, proteins, protein fragments and phospholipids. Preferably comprising:

(i) 10 to 40 % (w/w) glucans;
(ii) 5 to 30 % (w/w) mannans;
(iii) 5 to 30 % (w/w) free amino acids;
(iv) 10 to 40 % (w/w) protein; and
(v) 5 to 25 % (w/w) phospholipids.

In an embodiment,
In a preferred embodiment, the present rapeseed protein is a rapeseed protein isolate. The term isolate means that on a dry basis, 85 wt. % of the total weight of the isolate is protein. This is calculated using the Dumas method according to AOAC Official Method 991.20 Nitrogen (Total) in Milk, using a conversion factor of 6.25 was used to determine the amount of protein (% (w/w)). Typically, the non-protein content of the protein isolate includes non-protein compounds such as, fibre and/or other carbohydrates, minerals, anti-nutritional substances. Preferably the present protein isolate has a protein content of at least 90 wt.% (calculated as Dumas N x 6.25) on a dry weight basis, preferably at least 91, 92, 93, 94, 95, 96, 97, 98, or at least 99 wt.% on a dry weight basis (calculated as Dumas N x 6.25).

The rapeseed used to obtain the rapeseed protein as applied in the instant invention is usually of the varieties *Brassica napus* or *Brassica rapa*. These varieties contain low levels of erucic acid and glucosinolates, and are the source of canola, a generic term for rapeseed oil comprising less than 2% erucic acid and less than 30 mmol/g glucosinolates. The predominant storage proteins found in rapeseed are cruciferins and napins. Cruciferins are globulins and are the major storage protein in the seed. A cruciferin is composed of 6 subunits and has a total molecular weight of approximately 300 kDa. Napins are albumins and are low molecular weight storage proteins with a molecular weight of approximately 14 kDa. Another protein that may be present is oleosin, usually present in less than 1 wt. % of the rapeseed protein (isolate). Napins are easily solubilized and are primarily proposed for use in applications where solubility is key. Preferably the present rapeseed protein is a rapeseed protein isolate.

In a preferred embodiment, the present rapeseed protein (isolate) comprises 40 to 65 wt. % cruciferins and 35 to 60 wt. % napins (of the rapeseed protein). Preferably, the present rapeseed protein comprises 40 to 55 wt. % cruciferins and 45 to 60 wt. % napins.

In a preferred embodiment, the present rapeseed protein (isolate) comprises 60 to 85 wt. % cruciferins and 20 to 40 wt. % napins. Preferably, the present rapeseed protein comprises 65 to 75 wt. % cruciferins and 25 to 35 wt. % napins.

In a preferred embodiment, the present rapeseed protein (isolate) comprises 0 to 20 wt. % cruciferins and 80 to 100 wt. % napins. Preferably, the present rapeseed protein comprises 0 to 10 wt. % cruciferins and 90 to 100 wt. % napins. Preferably, the present rapeseed protein comprises 1 to 5 wt. % cruciferins and 95 to 100 wt. % napins.

Preferably, the amounts of cruciferins and napins are calculated based on the total amount of protein in the present coffee beverage. Or alternatively, the amounts of cruciferins and napins are calcuated based on the sum of cruciferins and napins present in the coffee beverage. Preferably, the amounts of cruciferins and napins are determined by size exclusion chromatography (SEC). Preferably, the amounts of cruciderins and napins are determined by size exclusion chromatography (SEC) using the following test:

samples of protein isolate are dissolved in a 500 mM NaCl saline solution and analyzed by High Performance SEC using the same solution as the mobile phase, followed by detection using measuring UV absorbance at 280 nm, wherein the relative contribution of cruciferin and napin (wt. %) was calculated as the ratio of the peak area of each protein with respect to the sum of both peak areas.

Preferably, the present rapeseed protein (isolate) comprises 40 to 65 wt. % 12S and 35 to 60 wt. % 2S. Preferably, the present rapeseed protein comprises 40 to 55 wt. % 12S and 45 to 60 wt. % 2S.

In a preferred embodiment, the present rapeseed protein (isolate) comprises 60 to 85 wt. % 12S and 20 to 40 wt. % 2S. Preferably, the present rapeseed protein comprises 65 to 75 wt. % 12S and 25 to 35 wt. % 2S.

In a preferred embodiment, the present rapeseed protein (isolate) comprises 0 to 20 wt. % 12S and 80 to 100 wt. % 2S. Preferably, the present rapeseed protein comprises 0 to 10 wt. % 12S and 90 to 100 wt. % 2S. Preferably, the present rapeseed protein comprises 1 to 5 wt. % 12S and 95 to 100 wt. % 2S.

Preferably, the amounts of 12S and 2S is determined by sedimentation velocity analytical ultracentrifugation (SV-AUC) analysis. Preferably, the amounts of 12S and 2S is determined by sedimentation velocity analytical ultracentrifugation (SV-AUC) analysis using the following test: samples of protein isolate are dissolved in a 3.0% (or 500 mM) NaCl saline solution and amounts determined using interference optics.

In a preferred embodiment, the present rapeseed protein (isolate) comprises a conductivity in a 2 wt.% aqueous solution of less than 9000 μS/cm over a pH range of 2 to 12. More preferably the conductivity of the native rapeseed protein isolate in a 2 wt. % aqueous solution is less than 4000 μS/cm over a pH range of 2.5 to 11.5. For comparison the conductivity of a 5 g/l NaCl aqueous solution is around 9400 μS/cm. Preferably conductivity is measured with a conductivity meter, for example Hach senslON+ EC71.

In a preferred embodiment, the present rapeseed protein (isolate) comprises a solubility of at least 88 % when measured over a pH range from 3 to 10 at a temperature of 23 +/-2 °C. Preferably a solubility of at least 90, 91, 92, 93, 94, 95, 96, 97, 98 or at least 99% over a pH range from 3 to 10 at a temperature of 23 +/-2 °C. This is also known as the soluble solids index (SSI).

Preferably, solubility is calculated by:

$$\text{Protein solubility (\%)} = (\text{concentration of protein in supernatant (in g/l) / concentration of protein in total dispersion (in g/l)}) \times 100.$$

Preferably, the solubility is measured using the following test:

- sufficient protein to supply 0.8 g of protein is weighed into a beaker;
- a small amount of demineralized water is added to the powder and the mixture is stirred until a smooth paste is formed;
- additional demineralized water is then added to make a total weight of 40 g (yielding a 2 % w/w protein dispersion);
- the dispersion is slowly stirred for at least 30 min using a magnetic stirrer;
- afterwards the pH is determined and adjusted to the desired level (2, 3, 4, etc.) with NaOH or HCl;
- the pH of the dispersion is measured and corrected periodically during 60 minutes stirring;
- after 60 minutes of stirring, an aliquot of the protein dispersion is reserved for protein concentration determination (Dumas analysis; Dumas N x 6.25), another portion of the sample is centrifuged at 20,000 G for 2 min;
- the supernatant and pellet are separated after centrifugation;
- the protein concentration of the supernatant is also determined by Dumas analysis (Dumas N x 6.25);
- and protein solubility is calculated by:

$$\text{Protein solubility (\%)} = (\text{concentration of protein in supernatant (in g/l) / concentration of protein in total dispersion (in g/l)}) \times 100.$$

For use in human food consumption the removal of phytates, phenolics (or polyphenolics) and glucosinolates prevents unattractive flavour and coloration and/or prevents decreased nutritional value of the protein isolate. At the same time this removal enhances the protein content of the protein isolate.

In a preferred embodiment, the present rapeseed protein (isolate) has a phytate level less than 5 wt.%, preferably less than, 4, 3, 2, 1, 0.5, 0.4, 0.3, 0.2. 0.1 or less than 0.01 wt. %. Alternatively, the present rapeseed protein (isolate) has a phytate level of 0.01 to 4, 0.05 to 3, 0.1 to 1 wt.%. Preferably the phytate level is measured using method QD495, based on Ellis et al, Analytical Biochemistry Vol. 77:536-539 (1977).

In a preferred embodiment, the present rapeseed protein (isolate) has a phenolic content of less than 1 wt.% on dry matter expressed as sinapic acid equivalents. Preferably less than 0.9, 0.8, 0.7, 0.6, 0.5, 0.4, 0.3, 0.2, 0.1, 0.05 or less than 0.01 wt.% on dry matter expressed as sinapic acid equivalents.

In addition to the present rapeseed protein, the present coffee beverage may comprise another plant-based protein, such as proteins from legumes and pulses such as, pea, fava bean protein, chickpea protein, lupin protein, lentil protein, mung bean protein, peanut; or seed proteins such as cotton seed protein, sunflower seed protein, sesame seed protein, camelina; cereal or pseudo cereal protein, such as oat protein, rice protein, corn protein, sorghum protein, quinoa protein, buckwheat; leaf protein such as alfalfa protein, clover protein, duckweed protein, grass protein; protein from stem or root tuber protein such as potato protein, sweet potato protein, cassava protein, yam protein, taro protein; protein derived from nuts, such as almond, hazelnut, walnut, cashew; coconut protein, or proteins from algal, insect or microbial sources, or proteins produced via fermentation (i.e. precision fermentation) such as fermentative dairy milk protein or fermentative egg protein. Preferably, the present coffee beverage comprises a combination of rapeseed protein and pea protein.

In an embodiment, the present coffee beverage comprises pea protein and rapeseed protein, wherein the ratio of pea protein to rapeseed protein is within the range of 70:30 to 95:5 (w/w), preferably 75:25 to 90:10 (w/w). The present inventors found that such a combination of pea protein and rapeseed protein provides a stable coffee beverage, that is particularly suitable for RTD formulations.

In an aspect, the present invention relates to rapeseed protein isolate packed in a single dosing, comprising 0.1 to 10 grams of rapeseed protein isolate, preferably comprising 0.5 to 5 grams of rapeseed protein isolate. The single dosing, similar as single dosing of sugar and coffee creamer, allows a convenient and hygienic way to use the rapeseed protein in fresh coffee. The end user can easily open the single dosing and add the rapeseed protein isolate to the coffee.

The term packed in a single dosing means that the rapeseed protein isolate is airtight packed, in a form that is suitable for single use by a consumer. Preferably the amount of rapeseed protein isolate in the single dosing is 1 to 4 grams, such as 1.5 to 3 grams.

Preferably, the rapeseed protein isolate packed in a single dosing comprises napins and cruciferins. Preferably the rapeseed protein isolate packed in a single dosing is as defined herein above and below.

Preferably, the present rapeseed protein (isolate) comprises 40 to 65 wt. % 12S and 35 to 60 wt. % 2S. Preferably, the present rapeseed protein comprises 40 to 55 wt. % 12S and 45 to 60 wt. % 2S.

In a preferred embodiment, the present rapeseed protein (isolate) comprises 60 to 85 wt. % 12S and 20 to 40 wt. % 2S. Preferably, the present rapeseed protein comprises 65 to 75 wt. % 12S and 25 to 35 wt. % 2S.

In a preferred embodiment, the present rapeseed protein (isolate) comprises 0 to 10 wt. % 12S and 90 to 100 wt. % 2S. Preferably, the present rapeseed protein comprises 1 to 5 wt. % 12S and 95 to 100 wt. % 2S.

In another aspect, the present invention relates to the use of rapeseed protein (isolate) for improving the taste of a coffee beverage. Preferably wherein improving the taste of the coffee beverage comprises increasing the astringency. Preferably wherein improving the taste of the coffee beverage comprises increasing the coffee strength (perception). Preferably wherein the rapeseed protein (isolate) is dosed in an amount of 0.1 to 10 wt. % of the coffee drink. Preferably wherein the rapeseed protein isolate is packed in a single dosing, comprising 0.1 to 10 grams of rapeseed protein isolate, preferably comprising 0.5 to 5 grams of rapeseed protein isolate.

The invention is further illustrated in the following example.

## Example 1

Regular black coffee was prepared by a standard office coffee machine. The temperature of the fresh coffee was 67°C. Rapeseed protein isolate (RPI) was added directly to the fresh coffee, with amounts of 0%, 1%, 3% and 5%. The rapeseed protein isolate has more than 90 wt. % protein and was made according to WO2018/007492. After cooling down to drink temperature, the coffee was tested by 4 testers and the results are show in table 1 below.

|  | Results |
| --- | --- |
| 1- 0% RPI | Weak coffee taste, a bit watery, |
| 2- +1% RPI | Hazy, lighter color, stronger taste, taste lingers like stronger coffee, more astringent |
| 3- +3% RPI | Hazy, lighter color, round taste, taste lingers like stronger coffee, more astringent |

(continued)

| | Results |
|---|---|
| 4- +5% RPI | Hazy, lighter color, like adding milk, stronger Canola flavor, taste lingers like stronger coffee, more astringent |

**Claims**

1. A coffee beverage comprising coffee and rapeseed protein, wherein the amount of rapeseed protein is between 0.1 and 10 wt. % of the coffee beverage.

2. A coffee beverage according to claim 1, wherein the coffee beverage comprises:

   - coffee;
   - vegetable oil; and
   - a hydrocolloid.

3. A coffee beverage according to claim 1 or claim 2, wherein the coffee beverage comprises:

   - 0.5 to 5 wt. % coffee;
   - 5 to 15 wt. % medium chain triglycerides;
   - high acyl gellan gum; and
   - buffer.

4. A coffee beverage according to any of the preceding claims, further comprising a sweetener.

5. A coffee beverage according to any of the preceding claims, wherein the coffee beverage is refrigerated or shelf-stable.

6. A coffee beverage according to any of the preceding claims, wherein the rapeseed protein comprises 40 to 65 wt. % cruciferins and 35 to 60 wt. % napins.

7. A coffee beverage according to any of the preceding claims, wherein the rapeseed protein comprises 60 to 85 wt. % cruciferins and 20 to 40 wt. % napins.

8. A coffee beverage according to any of the preceding claims, wherein the rapeseed protein comprises 0 to 20 wt. % cruciferins and 80 to 100 wt. % napins.

9. Rapeseed protein isolate packed in a single dosing, comprising 0.1 to 10 grams of rapeseed protein isolate, preferably comprising 0.5 to 5 grams of rapeseed protein isolate.

10. Use of rapeseed protein for improving the taste of a coffee beverage.

11. Use according to claim 10, wherein improving the taste of the coffee beverage comprises increasing the astringency.

12. Use according to claim 10, wherein improving the taste of the coffee beverage comprises increasing the coffee strength (perception).

13. Use according to any of the claims 10 to 12, wherein the rapeseed protein is dosed in an amount of 0.1 to 10 wt. % of the coffee drink.

Europäisches
Patentamt

European
Patent Office

Office européen
des brevets

# EUROPEAN SEARCH REPORT

Application Number

EP 22 16 2846

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/239714 A1 (NESTLE SA [CH]) 2 December 2021 (2021-12-02) | 1,2, 4-10,13 | INV. A23F5/24 |
| Y | * the whole document * | 1-13 | A23C11/06 A23C11/10 |
| X | US 2021/177000 A1 (SCHMITT CHRISTOPHE JOSEPH ETIENNE [CH] ET AL) 17 June 2021 (2021-06-17) | 1,4-10, 13 | A23F5/40 A23L2/66 A23L29/20 |
| Y | * paragraph [0007] – paragraph [0041] * | 1-13 | A23L29/269 A23L33/115 |
| X | US 2020/329726 A1 (WAKSMAN LUCILE [SG] ET AL) 22 October 2020 (2020-10-22) | 1,4-10, 13 | A23L33/185 A23L33/21 |
| Y | * the whole document * | 1-13 | |
| X | US 2016/050950 A1 (SCHMITT CHRISTOPHE JOSEPH ETIENNE [CH] ET AL) 25 February 2016 (2016-02-25) | 1,4-10, 13 | |
| Y | * the whole document * | 1-13 | |
| X | CN 104 540 392 A (NESTEC SA) 22 April 2015 (2015-04-22) * the whole document * | 1,4-10, 13 | |
| X | US 2013/216684 A1 (SCHWEIZER MARTIN [CA] ET AL) 22 August 2013 (2013-08-22) | 1,5,9 | TECHNICAL FIELDS SEARCHED (IPC) A23F |
| Y | * claims 20, 31 * | 1-13 | A23C A23L |
| Y | WO 2020/254504 A1 (DSM IP ASSETS BV [NL]) 24 December 2020 (2020-12-24) * the whole document * | 1-13 | |

The present search report has been drawn up for all claims

| Place of search | Date of completion of the search | Examiner |
|---|---|---|
| The Hague | 5 September 2022 | Merel-Rausch, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 2846

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2022

| Patent document cited in search report | | | Publication date | Patent family member(s) | | | Publication date |
|---|---|---|---|---|---|---|---|
| WO 2021239714 | A1 | | 02-12-2021 | NONE | | | |
| US 2021177000 | A1 | | 17-06-2021 | AU | 2018382355 | A1 | 16-04-2020 |
| | | | | BR | 112020007724 | A2 | 13-10-2020 |
| | | | | CA | 3079130 | A1 | 20-06-2019 |
| | | | | CL | 2020001058 | A1 | 02-10-2020 |
| | | | | CN | 111372474 | A | 03-07-2020 |
| | | | | EP | 3723503 | A1 | 21-10-2020 |
| | | | | SG | 11202002880U | A | 29-04-2020 |
| | | | | US | 2021177000 | A1 | 17-06-2021 |
| | | | | WO | 2019115280 | A1 | 20-06-2019 |
| US 2020329726 | A1 | | 22-10-2020 | AU | 2018386625 | A1 | 07-05-2020 |
| | | | | BR | 112020010062 | A2 | 03-11-2020 |
| | | | | CA | 3086789 | A1 | 27-06-2019 |
| | | | | CN | 111432643 | A | 17-07-2020 |
| | | | | EP | 3727002 | A1 | 28-10-2020 |
| | | | | JP | 2021509008 | A | 18-03-2021 |
| | | | | KR | 20200099136 | A | 21-08-2020 |
| | | | | PH | 12020550478 | A1 | 08-03-2021 |
| | | | | RU | 2020123375 | A | 14-01-2022 |
| | | | | US | 2020329726 | A1 | 22-10-2020 |
| | | | | WO | 2019122336 | A1 | 27-06-2019 |
| US 2016050950 | A1 | | 25-02-2016 | CA | 2903601 | A1 | 06-11-2014 |
| | | | | CN | 105163597 | A | 16-12-2015 |
| | | | | EP | 2991498 | A1 | 09-03-2016 |
| | | | | JP | 2016516439 | A | 09-06-2016 |
| | | | | PH | 12015502289 | A1 | 01-02-2016 |
| | | | | RU | 2015151180 | A | 05-06-2017 |
| | | | | US | 2016050950 | A1 | 25-02-2016 |
| | | | | WO | 2014177571 | A1 | 06-11-2014 |
| CN 104540392 | A | | 22-04-2015 | NONE | | | |
| US 2013216684 | A1 | | 22-08-2013 | US | 2008299282 | A1 | 04-12-2008 |
| | | | | US | 2013216684 | A1 | 22-08-2013 |
| | | | | WO | 2009152621 | A1 | 23-12-2009 |
| WO 2020254504 | A1 | | 24-12-2020 | CA | 3142082 | A1 | 24-12-2020 |
| | | | | CN | 113993389 | A | 28-01-2022 |
| | | | | EP | 3986156 | A1 | 27-04-2022 |
| | | | | WO | 2020254504 | A1 | 24-12-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018007492 A

**Non-patent literature cited in the description**

- **ELLIS et al.** *Analytical Biochemistry,* 1977, vol. 77, 536-539